Europäisches Patentamt

European Patent Office

Office européen des brevets

(19)

(11) **EP 0 722 423 B1**

(12) **EUROPEAN PATENT SPECIFICATION**

(45) Date of publication and mention
of the grant of the patent:
**16.09.1998 Bulletin 1998/38**

(21) Application number: **94928477.2**

(22) Date of filing: **06.10.1994**

(51) Int Cl.⁶: **C02F 1/32**, B01J 19/12

(86) International application number:
**PCT/GB94/02177**

(87) International publication number:
**WO 95/09814 (13.04.1995 Gazette 1995/16)**

(54) **PHOTODETECTOR APPARATUS**

PHOTODETEKTOR EINRICHTUNG

APPAREIL PHOTODETECTEUR

(84) Designated Contracting States:
**DE DK ES FR GB IE IT NL PT SE**

(30) Priority: **06.10.1993 GB 9320537**
     **06.10.1993 GB 9320544**
     **15.12.1993 GB 9325664**
     **03.02.1994 GB 9402042**

(43) Date of publication of application:
**24.07.1996 Bulletin 1996/30**

(73) Proprietor: **WATER RECOVERY PLC**
**Bicester, Oxon OX6 9JT (GB)**

(72) Inventor: **SNOWBALL, Malcolm, Robert**
**Epping Essex CM16 6TW (GB)**

(74) Representative: **Evans, Huw David Duncan**
**Urquhart-Dykes & Lord,**
**Three Trinity Court,**
**21-27 Newport Road**
**Cardiff CF2 1AA (GB)**

(56) References cited:
**EP-A- 0 202 891          EP-A- 0 236 575**
**WO-A-82/01703            DE-A- 3 739 966**

• **ELECTRONICS MADE SIMPLE, H. Jacobowitz, L.
Basford, pp. 34-39**

## Description

This invention relates to photodetector apparatus comprising a photodiode, circuit means for applying a reverse bias to the photodiode and for monitoring the magnitude of the reverse bias current flowing through the photodiode, so as determine the intensity of light which is incident on the photodiode.

It is well known that high-intensity ultra-violet (UV) light has germicidal properties which can be used to sterilise water. UV sterilisers are not widely used by water treatment companies, because they do not effectively treat all of the water. Often micro-organisms can pass through the steriliser without being affected by the UV light. This can happen when the micro-organisms are not exposed to high-intensity UV light for a sufficiently long period of time.

The germicidal effect of UV light occurs at a wavelength of 245-265 nm, and therefore it is important to ensure that the light source maintains a high output within this wavelength range, otherwise micro-organisms can pass through the steriliser without being affected by the UV light.

EP 0 202 891 discloses a UV water steriliser comprising reverse biassed photodiodes and a monitoring circuit, which is used to determine whether steriliser is working effectively at the germicidal wavelengths.

Other expensive and complicated laboratory type photodetector apparatus are available which can be tuned to accurately measure the intensity of particular wavelengths of light. However, these apparatus are not suitable for industrial applications owing to their high cost. Thus, in accordance with this invention there is provided a photodetector apparatus of the above-mentioned type which is characterised in that the reverse-biassed photodiode is a vacuum photodiode, the circuit means being arranged to determine the intensity of ultra-violet light incident on the photodiode, having wavelengths in the range of 245 - 265 nm.

Although vacuum photodiodes have a broad spectral response band in their conventional forward bias mode of operation, we have found that in the reverse bias mode they have a narrow spectral response band.

Vacuum photodiodes do not suffer from exposure ageing when operated in the reverse bias mode. They also have the advantage of a linear output, which remains stable across a wide range of temperatures.

Preferably the photodiode comprises a vacuum photodiode having a CsTe photosensitive cathode. CsTe vacuum photodiodes used in the reverse bias mode have a spectral response range of 185 nM to 327 nm, and thus are particularly sensitive to UV at germicidal wavelengths i.e. 245-265 nm.

Preferably the photodiode is connected to a circuit having a high input impedance, which does not load the device.

Preferably the photodiode is mounted in a housing comprising a transparent wall having a relatively adherence-resistant material on its outer surface. The adherence-resistant material prevents slime and other waste matter from building up on the transparent wall when the apparatus is used to measure the amount of light transmitted through a fluid.

Preferably the material comprises a fluorocarbon polymer such as PTFE.

An embodiments of this invention will now be described by way of example only and with reference to the accompanying drawings, in which:

FIGURE 1 is a sectional view through an ultra-violet water treatment system comprising a photodetector in accordance with this invention;

FIGURE 2 is a graph showing the spectral response of the photodiode of the photodetector of Figure 1;

FIGURE 3 is a schematic diagram of a signal processing circuit of the photodetector of Figure 1; and

FIGURE 4 is a graph of output voltage against radiation intensity of the circuit of Figure 3.

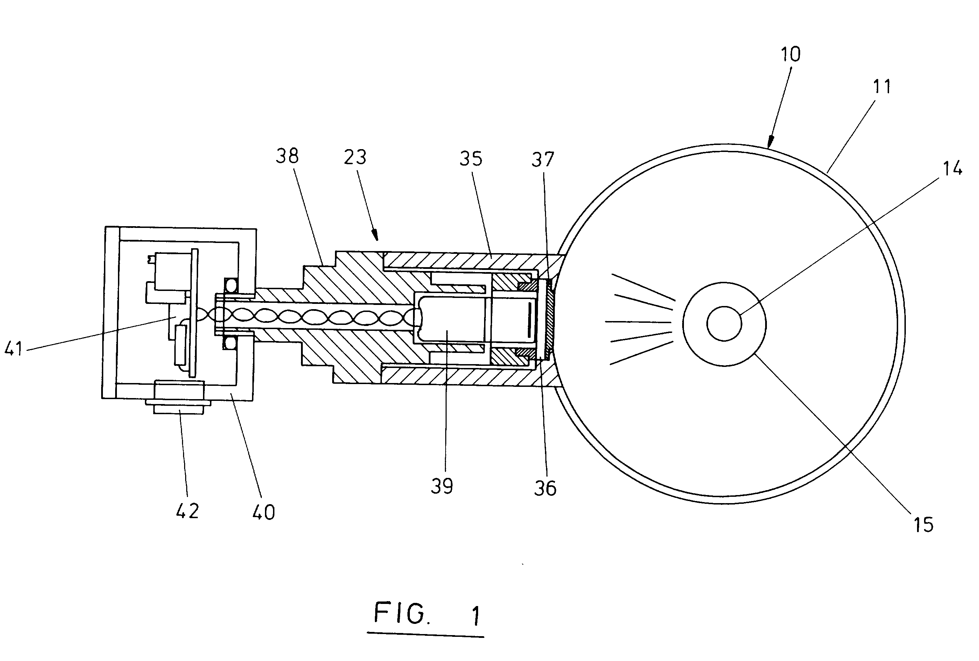

Referring to Figure 1 of the drawings, there is shown a water treatment system comprising an ultra-violet water treatment chamber 10 having an elongate tubular duct 11 provided with inlet and outlet ports at its opposite ends. An elongate ultra-violet lamp 14 is mounted inside a quartz glass sleeve 15 which extends along the axis of the duct 11. The sleeve 15 is sealed at its opposite ends to the end walls of the duct 11.

A photodetector 23 is mounted on the external wall of the duct 11 and is directed towards the lamp 14. A microprocessor has inputs connected to a fluid flow measuring device, the photodetector head 23, temperature sensing elements and to a current transformer.

In use, water flows along the duct 11 between the inlet and outlet ports of the chamber 10. The UV lamp 14 is energised and emits UV light so that the water flowing through the duct 11 is exposed to UV light. The volume of the chamber 10 is preprogrammed into the microprocessor. The flow rate of the water is measured by the flow measuring device 26 and fed into the microprocessor, so that the length of time which the water being treated is exposed to the UV light can be calculated from the following formula:

$$\text{Exposure Time} = \frac{\text{Volume of the chamber}}{\text{Flow Rate}} = \text{Seconds}$$

The photodetector head 23 monitors the intensity of the UV light at the wall of the duct. The output from the photodetector head 23 is connected to the microprocessor, so that the dose rate of the system can be calculated from the following formula:

$$\text{Dose Rate} = \text{UV Intensity x Exposure Time} = \text{mW s/cm}^2$$

The microprocessor compares the instantaneous value of the dose rate with the preset minimum acceptable dose rate. If the dose rate is too low, then the microprocessor outputs a signal to the motorised fluid flow control valve, in order to reduce the water flow rate through the system, thereby increasing the dose rate. Thus, a lethal dose of radiation is always delivered. When the flow rate of the water reaches the minimum preset value, the valve operates to either shut down the system or to connect further treatment chambers in parallel with the supply.

The system is able to effectively treat all micro organisms in the water by ensuring that the water always receives greater than the minimum dose of UV light at germicidal wavelengths that is required to kill them. The photodetector 23 is mounted at the furthest point away from the lamp 14 so that the worst-case dose rate is used in the calculations. Micro-organisms nearest to the lamp 14 will receive greater than the minimum specified dose.

It will be appreciated that the system is fully automatic, thereby ensuring that a correct (lethal) dose of radiation is always delivered to the microorganisms. Water treatment companies can therefore have confidence that the system is working effectively.

The photodetector 23 is fitted to the outside of the duct 11 of the ultra-violet water sterilisation chamber 10, such that it receives light emitted from the lamp 14. The photodetector 23 comprises a housing having a tubular portion 35 attached at one end to the duct 11. The tubular portion 35 is closed at one end by a window which comprises an optical attenuator 36 having a layer 37 of PTFE on its outer surface. The optical attenuator 36 has a step-down ratio in excess of 1500:1, and is manufactured by coating a disc of synthetic fused silica with several fine coatings of an alloy of NiCr, e.g. by sputtering or evaporation, until the desired step-down ratio is achieved.

The housing further comprises a body portion 38 which screw threads into the opposite end of the tubular portion 35. A vacuum photodiode 39 having a CsTe cathode is mounted axially in the body portion 38 behind the optical attenuator 36.

The outer end of the photodetector 23 comprises a compartment 40 which contains an electronic circuit 41 connected to the vacuum photodiode 39. A connector 42 is provided on the wall of the compartment for connecting the circuit 41 to the microprocessor and to power supply circuits of the treatment system.

In use, as water flows along the duct 11 between the inlet and outlet ports 12,13 of the chamber 10, the flow of water creates a scrubbing action which cleans the surface of the PTFE covered optical attenuator 36. Furthermore, the PTFE layer 37 also prevents slime etc. from building up on the attenuator 36.

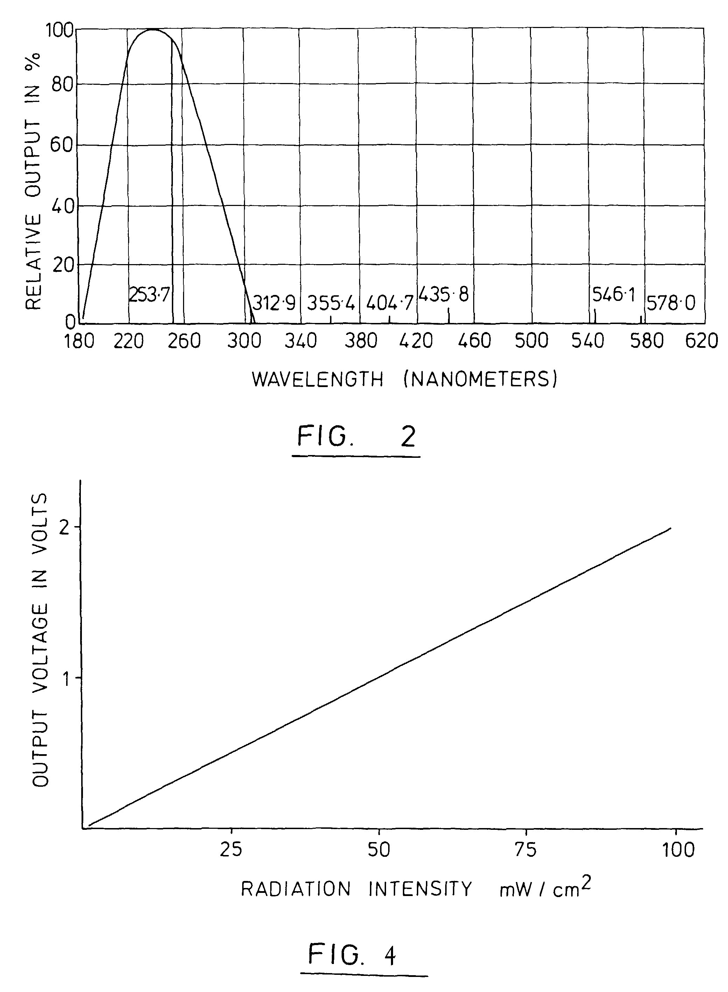

Referring to Figure 2, there is shown a graph of the spectral response of the vacuum photodiode 39 mounted inside the photodetector 23. The processing circuit 41 provides the vacuum photodiode 39 with a reverse bias, so that only a reverse leakage current flows between its electrodes. This reverse leakage current flows when UV light having a wavelength between 185-327 nm is incident in the photodiode. The UV lamp 14 outputs light at 253.7 nm, which is close to the point of maximum sensitivity of the reverse-biassed photodiode.

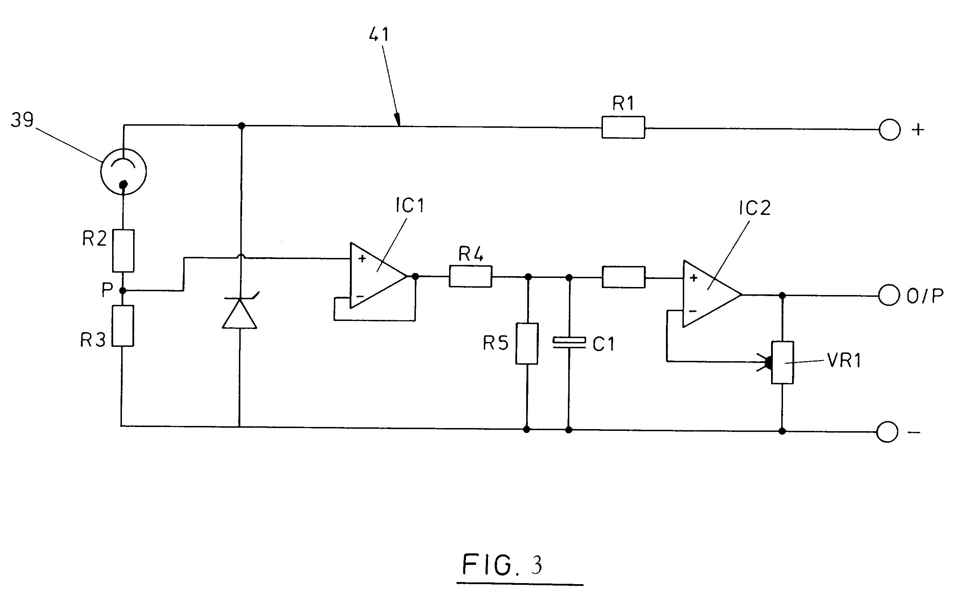

Referring to Figure 3, the photodiode 39 is connected in series with several high value resistors R1,R2,R3 across the supply, so as to form a potential divider circuit. A point P on the potential divider is connected to the non-inverting input of an operational amplifier IC1, which is configured as a buffer amplifier. IC1 comprises a CMOS device having a high input impedance which does not load the photodiode 39, and which provides impedance matching between the photodiode and the output of the circuit 41. The output of IC1 is connected to a potential divider circuit R4,R5, which steps down the magnitude of its output voltage. A capacitor C1 connected across resistor R5 smooths the signal at the junction of the two resistors R4,R5, so as to form a DC level which varies in magnitude depending upon the intensity of UV radiation at wavelengths of between 185 - 327 nm.

A second operational amplifier IC2 is configured as a non-inverting amplifier, the gain of which is adjusted by VR1 to give a DC voltage of 27 mV per $mW/cm^2$ radiation intensity. Referring to Figure 6, the output from the circuit 41 is directly proportional to the UV radiation incident on the photodiode 39, and thus complicated processing circuits are not needed owing to the linear output.

**Claims**

1.  A photodetector apparatus (23) comprising a photodiode (39), circuit means (41) for applying a reverse bias to the photodiode (39) and for monitoring the magnitude of the reverse bias current flowing through the photodiode (39), <u>characterised in that</u> the reverse-biassed photodiode (39) is a vacuum photodiode, the circuit means (41) being arranged to determine the intensity of ultra-violet light incident on the photodiode (39), having wavelengths in the range of 245 - 265 nm.

2.  A photodetector apparatus as claimed in claim 1, <u>characterised in that</u> the vacuum photodiode (39) has a CsTe photosensitive cathode.

3.  A photodetector apparatus as claimed in claims 1 or 2, <u>characterised in that</u> the circuit means (14) has a high input impedance.

4. A photodetector apparatus as claimed in any preceding claim, <u>characterised in that</u> the photodiode (39) is mounted in a housing (35) comprising a transparent wall (36) having a relatively adherence-resistant material (37) on its outer surface.

5. A photodetector apparatus as claimed in claim 4, <u>characterised in that</u> the material (37) comprises a fluorocarbon polymer.


**Patentansprüche**

1. Photodetektorvorrichtung (23) mit einer Photodiode (39), einem Schaltungsmittel (41) zum Anlegen einer Vorspannung in Sperrichtung an die Photodiode (39) und zum Überwachen der Größe des durch die Photodiode (39) fließenden Sperrstroms, dadurch gekennzeichnet, daß die in Sperrichtung vorgespannte Photodiode (39) eine Vakuumphotodiode ist, wobei das Schaltungsmittel (41) so angeordnet ist, daß es die Stärke von auf die Photodiode (39) auftreffendem ultraviolettem Licht, das Wellenlängen im Bereich von 245 - 265 nm aufweist, bestimmt.

2. Photodetektorvorrichtung nach Anspruch 1, dadurch gekennzeichnet, daß die Vakuumphotodiode (39) eine lichtempfindliche CsTe-Kathode aufweist.

3. Photodetektorvorrichtung nach Anspruch 1 oder 2, dadurch gekennzeichnet, daß das Schaltungsmittel (41) eine hohe Eingangsimpedanz aufweist.

4. Photodetektorvorrichtung nach einem der vorhergehenden Ansprüche, dadurch gekennzeichnet, daß die Photodiode (39) in einem Gehäuse (35) angebracht ist, das eine transparente Wand (36) mit einem relativ adhäsionsresistenten Material (37) auf seiner Außenfläche umfaßt.

5. Photodetektorvorrichtung nach Anspruch 4, dadurch gekennzeichnet, daß das Material (37) aus einem Fluorkohlenstoff-Polymer besteht.


**Revendications**

1. Appareil photodétecteur (23) comprenant une photodiode (39), un moyen de circuit (41) pour appliquer une polarisation inverse à la photodiode (39) et pour contrôler la grandeur du courant de polarisation inverse passant à travers la photodiode (39), <u>caractérisé en ce que</u> la photodiode à polarisation inverse (39) est une photodiode à vide, le moyen de circuit (41) étant disposé pour déterminer l'intensité de la lumière ultraviolette frappant la photodiode (39), ayant des longueurs d'onde dans la gamme de 245 à 265 nm.

2. Appareil photodétecteur selon la revendication 1, <u>caractérisé en ce que</u> la photodiode à vide (39) a une cathode photosensible au CsTe.

3. Appareil photodétecteur selon la revendication 1 ou 2, <u>caractérisé en ce que</u> le moyen de circuit (14) a une impédance d'entrée élevée.

4. Appareil photodétecteur selon l'une quelconque des revendications précédentes, <u>caractérisé en ce que</u> la photodiode (39) est montée dans un logement (35) comprenant une paroi transparente (36) comportant une matière relativement résistante à l'adhérence (37) sur sa surface externe.

5. Appareil photodétecteur selon la revendication 4, <u>caractérisé en ce que</u> la matière (37) comprend un polymère fluorocarboné.

FIG. 1

EP 0 722 423 B1

FIG. 2

FIG. 4

FIG. 3

EP 0 722 423 B1